# EUROPÄISCHE PATENTSCHRIFT

(11) **EP 3 397 523 B1**
(45) Veröffentlichungstag und Bekanntmachung des Hinweises auf die Patenterteilung: **02.09.2020**
(21) Anmeldenummer: 16798678.5
(22) Anmeldetag: 14.11.2016
(51) Int. Cl.: B60R 1/00

(54) **VERFAHREN ZUR DARSTELLUNG EINES RÜCKWÄRTIGEN AUSSENBEREICHES EINES FAHRZEUGES**
METHOD FOR THE REPRESENTATION OF A REAR OUTER REGION OF A VEHICLE
PROCÉDÉ DE VISUALISATION D'UNE ZONE EXTÉRIEURE ARRIÈRE D'UN VÉHICULE

(30) Priorität: 30.12.2015 DE 102015122997
(43) Veröffentlichungstag der Anmeldung: 07.11.2018
(73) Patentinhaber: Huf Hülsbeck & Fürst GmbH & Co. KG, 42551 Velbert (DE)
(72) Erfinder: HÜSSLER, Berthold, 48683 Ahaus (DE); ROSENBAUM, Marco, 40668 Meerbusch Lank-Latum (DE); BUSCHMANN, Gerd, 42553 Velbert (DE)
(86) Internationale Anmeldenummer: PCT/EP2016/077582
(87) Internationale Veröffentlichungsnummer: WO 2017/114608

(56) Entgegenhaltungen:
- EP-A1- 2 955 065
- EP-A1- 3 028 898
- DE-A1-102011 118 253
- DE-A1-102012 004 640

## Beschreibung

Die vorliegende Erfindung betrifft ein Verfahren zur Darstellung eines rückwärtigen Außenbereiches eines Fahrzeuges gemäß der im Oberbegriff des Anspruchs 1 näher definierten Art. Ein Verfahren nach dem Oberbegriff von Anspruch 1 ist aus der DE 10 2011 118253 A1 bekannt.

Aus dem Stand der Technik ist es bekannt, ein oder mehrere Kameravorrichtungen an einem Fahrzeug zur Erfassung eines Außenbereiches des Fahrzeugs einzusetzen. Die Kameravorrichtungen stellen dabei Bildinformationen über den Außenbereich zur Verfügung, welche zur Verbesserung und/oder Erweiterung der Sicht eines Fahrers des Fahrzeugs dienen können. So ist es bspw. möglich, dass beim Einlegen eines Rückwärtsgangs des Fahrzeugs zum Einparken die Bildinformationen einer Heckkamera auf einem Monitor im Fahrzeuginnenraum angezeigt werden.

Allerdings sind bekannte Kameravorrichtungen bei Fahrzeugen oft nur sehr begrenzt für bestimmte Situationen, wie dem Einparken, nutzbar. Es hat sich zudem als Nachteil herausgestellt, dass der Fahrer während der Fahrt durch die bereitgestellten Bildinformationen über den Außenbereich des Fahrzeugs abgelenkt werden kann. Hierbei ist ferner ein Problem, dass der dargestellte Außenbereich häufig nicht der sicherheitsrelevante Bereich ist, welcher während der Fahrt eingesehen werden muss. In Abhängigkeit von der Kameraeinstellung kann daher die Bereitstellung von Bildinformationen auch die Sicherheit während der Fahrt beeinträchtigen.

Es ist daher eine Aufgabe der vorliegenden Erfindung, die voranstehend beschriebenen Nachteile zumindest teilweise zu beheben. Insbesondere ist es Aufgabe der vorliegenden Erfindung, die Sicherheit während der Fahrt zu gewährleisten und bevorzugt eine Sicht auf den sicherheitsrelevanten rückwärtigen Außenbereich, insbesondere in einem toten Winkel des Fahrzeugs, zuverlässig zu ermöglichen.

Die voranstehende Aufgabe wird gelöst durch ein Verfahren mit den Merkmalen des Anspruchs 1. Weitere Merkmale und Details der Erfindung ergeben sich aus den jeweiligen Unteransprüchen, der Beschreibung und den Zeichnungen.

Insbesondere wird die Aufgabe gelöst durch ein Verfahren zur Darstellung eines rückwärtigen Außenbereichs eines Fahrzeugs, vorzugsweise eines Kraftfahrzeuges und/oder eines Personenkraftfahrzeuges und/oder eines Lastkraftfahrzeuges. Das Fahrzeug umfasst wenigstens eine Kameravorrichtung, welche in verschiedene Kameraeinstellungen gebracht wird und/oder bringbar ist. Hierbei ist insbesondere vorgesehen, dass in Abhängigkeit von den Kameraeinstellungen jeweils unterschiedliche kameraeinstellungsabhängige Aufnahmebereiche des Außenbereichs des Fahrzeugs durch die Kameravorrichtung erfasst werden. Mit anderen Worten wird durch die Änderung der Kameraeinstellung der durch die Kameravorrichtung erfasste Aufnahmebereich des Außenbereichs verändert. Vorzugsweise ist dabei der Aufnahmebereich jeweils eine Abbildung eines bestimmten Bereichs des Außenbereichs des Fahrzeugs. Bevorzugt ist der Aufnahmebereich eine optische Abbildung, welche durch ein optisches abbildendes System der Kameravorrichtung erzeugt wird. So kann es bspw. vorgesehen sein, dass die Kameravorrichtung zur digitalen Aufzeichnung der Abbildung zumindest einen elektronischen Bildsensor aufweist, welche insbesondere die Bildinformation liefert. Erfindungsgemäß kann es dabei vorgesehen sein, dass unabhängig von der Kameraeinstellung der jeweiligen Kameravorrichtung ein jeweiliger Festaufnahmebereich des Außenbereichs durch die jeweilige Kameravorrichtung erfasst wird, um den jeweiligen Festaufnahmebereich für einen Bediener, insbesondere Fahrer, des Fahrzeugs darzustellen. So ist es denkbar, dass eine erste Kameravorrichtung einen für die erste Kameravorrichtung festgelegten ersten Festaufnahmebereich erfasst und eine zweite Kameravorrichtung einen für die zweite Kameravorrichtung festgelegten zweiten Festaufnahmebereich erfasst. Der erste Festaufnahmebereich kann sich dabei von dem zweiten Festaufnahmebereich unterscheiden, insbesondere jedoch nicht für unterschiedliche Kameraeinstellungen der jeweiligen Kameravorrichtung. Die Darstellung des Festaufnahmebereichs kann bspw. modifiziert oder unmodifiziert auf einer Anzeigevorrichtung im Fahrzeuginnenraum erfolgen. Hierzu wird insbesondere die von der Kameravorrichtung erfasste (Bild-) Information in eine Anzeigeinformation umgewandelt, so dass anhand der Anzeigeinformationen der Festaufnahmebereich dargestellt werden kann. Dies hat den Vorteil, dass stets im Normalbetrieb der Festaufnahmebereich, insbesondere als sicherheitsrelevanter rückwärtiger Außenbereich des Fahrzeugs, für den Bediener des Fahrzeugs, dargestellt werden kann und damit die Sicherheit beim Betrieb des Fahrzeugs verbessert wird. Der Festaufnahmebereich, welcher z. B. zumindest teilweise in einem toten Winkel des Fahrzeugs liegt, wird dabei bevorzugt stets während des Normalbetriebs der Kameravorrichtung erfasst, bspw. immer dann, wenn auch der (das heißt insbesondere der anhand einer beliebigen Kameraeinstellung im Normalbetrieb eingestellte) Aufnahmebereich durch die Kameravorrichtung erfasst wird.

Es ist denkbar, dass der Festaufnahmebereich unabhängig von der Kameraeinstellung, in welche die Kameravorrichtung (insbesondere im Normalbetrieb) gebracht ist, erfasst wird. Die Kameraeinstellungen entsprechend dabei bspw. einer stufenweise oder stufenlosen Verschiebung eines Aufnahmewinkels der Kameravorrichtung, und umfassen bspw. maximal einen Gesamtaufnahmebereich des rückwärtigen Außenbereichs des Fahrzeugs. Mit anderen Worten umfasst der Gesamtaufnahmebereich sämtliche Aufnahmebereiche der Kameravorrichtung, welche bei sämtlichen Kameraeinstellungen der Kameravorrichtung durch die Kameravorrichtung im Normalbetrieb erfassbar sind. Der Gesamtaufnahmebereich ist dabei vorzugsweise derart beschränkt, dass stets der Festaufnahmebereich durch die Kameravorrichtung erfasst wird. Dies hat den Vorteil, dass der Bediener des Fahrzeugs stets den sicherheitsrelevanten Außenbereich einsehen kann. Dies ist bevorzugt nur im Normalbetrieb der Kameravorrichtung gewährleistet, wobei bspw. in einem Sonderbetrieb und/oder einem Deaktivzustand der Kameravorrichtung, bspw. bei eingelegtem Rückwärtsgang und/oder beim Parken bzw. bei ausgeschaltetem Motor des Fahrzeugs, selbstverständlich der Festaufnahmebereich nicht stets dargestellt werden und/oder nicht unabhängig von der Kameraeinstellung durch die Kameravorrichtung erfasst werden muss. Die erfindungsgemäße Erfassung der kameraeinstellungsabhängigen Aufnahmebereiche und/oder die Kameraeinstellungen betreffen dabei bevorzugt ausschließlich den Normalbetrieb der jeweiligen Kameravorrichtung, wobei besonders bevorzugt außerhalb des Normalbetriebes, insbesondere im Sonderbetrieb, z. B. Sonderaufnahmebereiche des Außenbereiches des Fahrzeuges in Abhängigkeit von mindestens einer oder verschiedenen Sonderkameraeinstellung(en) der Kameravorrichtung durch die jeweilige Kameravorrichtung erfasst werden. Der Normalbetrieb ist beispielsweise ein Betrieb während der Fahrt und/oder bei eingeschalteter "digitaler Außenspiegel"-Funktion.

Ferner kann im Rahmen der Erfindung vorgesehen sein, dass zumindest einer der nachfolgenden Schritte vorgesehen ist, wobei insbesondere die Schritte in beliebiger Reihenfolge oder nacheinander durchgeführt werden:
- Ausrichten der Kameravorrichtung am Fahrzeug, wobei in einer ersten Kameraeinstellung und/oder ersten Ausrichtung ein erster Aufnahmebereich und in weiteren Kameraeinstellungen und/oder weiteren Ausrichtungen jeweils weitere Aufnahmebereiche, insbesondere in Abhängigkeit von der Ausrichtung und/oder Kameraeinstellung, (durch die Kameravorrichtung) erfasst werden (können),
- Ermitteln von wenigstens einer Bildinformation über den ersten Aufnahmebereich durch die Kameravorrichtung,
- Ermitteln von wenigstens einer Anzeigeinformation über zumindest einen teilweisen ersten Aufnahmebereich aus der Bildinformation,
- Anzeigen der Anzeigeinformation durch mindestens eine im Fahrzeuginnenraum angeordnete Anzeigevorrichtung zur Darstellung des oder mindestens eines Festaufnahmebereiches des Außenbereiches und/oder des Aufnahmebereiches für den Bediener des Fahrzeuges,
wobei der Festaufnahmebereich, insbesondere als digitaler Außenspiegel zur Bewirkung der "digitalen Außenspiegel"-Funktionalität, unabhängig von der Kameraeinstellung dargestellt (angezeigt) wird. Dies hat den Vorteil, dass die Sicherheit während der Fahrt deutlich erhöht werden kann. Weiter kann durch die Nutzung der Darstellung des Festaufnahmebereichs als Alternative zum Außenspiegel auf einen Außenspiegel am Fahrzeug verzichtet werden und somit bspw. die Fußgängersicherheit verbessert werden. Insbesondere wenn der Festaufnahmebereich einen Bereich des Außenbereichs des Fahrzeugs umfasst, welcher üblicherweise durch den Außenspiegel des Fahrzeugs für den Bediener einsehbar ist, kann die Darstellung des Festaufnahmebereichs als digitaler Außenspiegel genutzt werden.

Optional ist das Fahrzeug seiten- und/oder außenspiegelfrei ausgebildet, das heißt insbesondere ohne die üblichen rechts- und/oder linksseitigen Seiten- und/oder Außenspiegel am Fahrzeug. Alternativ oder zusätzlich ist beispielsweise eine "digitale Außenspiegel"-Funktionalität vorgesehen, welche durch die Darstellung (Anzeige) des Festaufnahmebereiches realisiert wird. Somit kann die Sicherheit während der Fahrt gewährleistet und verbessert werden.

Vorzugsweise ist der Festaufnahmebereich ein Teilbereich des erfassten Aufnahmebereichs, wobei bspw. der Festaufnahmebereich mit den weiteren Teilen des Aufnahmebereichs auf der Anzeigevorrichtung dargestellt wird. Das Ausrichten der Kameravorrichtung am Fahrzeug erfolgt bspw. dadurch, dass die Kameravorrichtung beweglich am Fahrzeug befestigt wird und/oder in eine vordefinierte Position für den Normalbetrieb ausgefahren wird. Anschließend kann bspw. vorgesehen sein, dass die Kameravorrichtung in Abhängigkeit von der Kameraeinstellung bewegt wird und/oder unterschiedliche Aufnahmewinkel einnehmen kann. Die Kameravorrichtung kann die Bildinformation, vorzugsweise als eine digitale Information, insbesondere dadurch ermitteln, dass zumindest ein Bildsensor der Kameravorrichtung digital und/oder elektronisch ausgewertet wird. Die Anzeigeinformation wird bspw. dadurch ermittelt, dass die Bildinformation modifiziert oder unmodifiziert wird und/oder an die Anzeigevorrichtung übertragen wird. Weiter kann das Ermitteln der Anzeigeinformationen vorzugsweise noch weitere Verarbeitungsschritte umfassen, bspw. eine Extraktion des Festaufnahmebereichs durch eine Bildverarbeitung anhand der Bildinformationen. Somit kann in einfacher Weise durch eine digitale Verarbeitung der Bildinformationen der Festaufnahmebereich dargestellt werden. Erfindungsgemäß ist, vorgesehen, dass die Kameravorrichtung zum Ausrichten relativ zum Fahrzeug bewegt, insbesondere verschwenkt, wird, um den Aufnahmebereich (in Abhängigkeit von der Kameraeinstellung) zu verändern, wobei unabhängig von der Bewegung der Kameravorrichtung der Festaufnahmebereich erfasst und/oder dargestellt wird und vorzugsweise hierzu die Darstellung des Festaufnahmebereichs bewegungskompensiert erfolgt. Die Bewegungskompensation wird bspw. durch eine digitale Bildverarbeitung anhand der Bildinformation durchgeführt. Die Kameravorrichtung kann insbesondere in horizontaler und/oder in vertikaler Richtung bewegt werden, um unterschiedliche Aufnahmebereich zu erfassen. Um trotz dieser unterschiedlichen Aufnahmebereiche bspw. die Darstellung des Festaufnahmebereichs als digitaler Außenspiegel zu ermöglichen, wird insbesondere durch eine Bildverarbeitung und/oder durch die Bewegungskompensation gewährleistet, dass der Festaufnahmebereich im Normalbetrieb stets im Wesentlichen gleich bleibend und/oder mit einer festen Perspektive, durch die Anzeigevorrichtung für den Bediener dargestellt wird.

Vorteilhaft ist es zudem, wenn die Kameravorrichtung in Abhängigkeit von den Kameraeinstellungen zur Erfassung der jeweiligen kameraeinstellungsabhängigen Aufnahmebereiche am Fahrzeug ausgerichtet wird, wobei die Ausrichtung, z. B. in Bezug auf den maximalen Auslenkgrad der Kameravorrichtung, derart begrenzt wird, dass der Festaufnahmebereich (im Normalbetrieb) stets durch den jeweiligen kameraeinstellungsabhängigen Aufnahmebereich umfasst wird. Der maximale Auslenkungsgrad ist dabei bspw. durch den Gesamtaufnahmebereich vorgegeben. Die Ausrichtung am Fahrzeug erfolgt bspw. durch ein Verschwenken und/oder durch ein Bewegen und/oder durch ein Drehen und/oder durch ein Ausfahren der Kameravorrichtung, wobei hierzu bspw. ein Antrieb am Fahrzeug vorgesehen und mit der Kameravorrichtung verbunden ist. Der Antrieb wird dabei bspw. durch eine Steuerungsvorrichtung derart gesteuert, dass der Festaufnahmebereich im Normalbetrieb stets durch die Kameravorrichtung erfasst wird. Somit kann die Erfassung und Darstellung des Festaufnahmebereichs gewährleistet werden.

In einer weiteren Möglichkeit kann es vorgesehen sein, dass zumindest einer der nachfolgenden Schritte vorgesehen ist, wobei insbesondere die Schritte nacheinander oder in beliebiger Reihenfolge durchgeführt werden:
- Erfassen eines ersten Aufnahmebereiches durch die Kameravorrichtung in einer ersten Kameraeinstellung,
- Ermitteln einer ersten Bildinformation über den ersten Aufnahmebereich,
- Ermitteln einer ersten Anzeigeinformation über zumindest einen teilweisen ersten Aufnahmebereich und den Festaufnahmebereich aus der ersten Bildinformation,
- Anzeigen der ersten Anzeigeinformation durch die Anzeigevorrichtung, wobei der erste Aufnahmebereich mit dem Festaufnahmebereich dargestellt wird,
- Erfassen eines zweiten Aufnahmebereiches durch die Kameravorrichtung in einer zweiten Kameraeinstellung, wobei zum Wechsel von der ersten in die zweite Kameraeinstellung vorzugsweise eine Bewegung der Kameravorrichtung durchgeführt wird,
- Ermitteln einer zweiten Bildinformation über den zweiten Aufnahmebereich,
- Ermitteln einer zweiten Anzeigeinformation über zumindest einen teilweisen zweiten Aufnahmebereich und den Festaufnahmebereich aus der zweiten Bildinformation,
- Anzeigen der zweiten Anzeigeinformation durch die Anzeigevorrichtung, wobei der zweite Aufnahmebereich (gemeinsam und/oder zeitgleich) mit dem Festaufnahmebereich dargestellt wird.

Der Festaufnahmebereich ist somit insbesondere immer ein fester Bereich des Außenbereichs, welcher aus den aktuell durch die Kameravorrichtung ermittelten Bildinformationen (z. B. ersten und/oder zweiten und/oder weiteren Bildinformationen) gewonnen wird. Dies ermöglicht es, durch eine schnelle und einfache Auswertung der Bildinformationen stets einen festen Bereich des Außenbereichs zu extrahieren und darzustellen.

In einer weiteren Möglichkeit kann vorgesehen sein, dass die Aufnahmebereiche jeweils Teilbereiche eines Gesamtaufnahmebereichs des Außenbereichs sind, wobei die Kameravorrichtung in den verschiedenen Kameraeinstellungen maximal den Gesamtaufnahmebereich erfassen kann. Dabei wird vorzugsweise der Gesamtaufnahmebereich derart beschränkt, dass stets der Festaufnahmebereich und/oder ein Maximalfestaufnahmebereich durch die Kameravorrichtung im Normalbetrieb in jeder Kameraeinstellung erfasst werden kann. Somit kann die Sicherheit während der Fahrt erhöht werden.

Es ist ferner denkbar, dass der Festaufnahmebereich aus einer Seitenspiegelperspektive für den Bediener dargestellt wird. Da somit ein fester Bereich des insbesondere rückwärtigen Außenbereichs des Fahrzeugs im Normalbetrieb stets aus der gleichen Perspektive, d. h. der Seitenspiegelperspektive, dargestellt wird, kann insbesondere der dargestellte Festaufnahmebereich als digitaler Außenspiegel genutzt werden. Es ist dabei vorzugsweise möglich, dass ein erster Festaufnahmebereich aus einer linksseitigen Seitenspiegelperspektive und ein zweiter Festaufnahmebereich aus einer rechtsseitigen Seitenspiegelperspektive auf einer gemeinsamen Anzeigevorrichtung oder jeweils unterschiedlichen Anzeigevorrichtungen oder Anzeigemitteln im Innenraum des Fahrzeugs dargestellt werden.

Es kann insbesondere vorgesehen sein, dass der Festaufnahmebereich und/oder die Kameraeinstellung insbesondere unabhängig voneinander durch den Bediener des Fahrzeugs einstellbar sind, wobei der Festaufnahmebereich nur innerhalb eines Maximalfestaufnahmebereichs eines Gesamtaufnahmebereichs einstellbar ist. Die Einstellbarkeit bezieht sich dabei insbesondere auf eine Veränderung des Aufnahmebereichs, z. B. in vertikaler und/oder horizontaler Richtung. Die Kameraeinstellung wird dabei bspw. durch eine Steuerung der Bewegung der Kameravorrichtung und/oder durch eine Festlegung der Position der Kameravorrichtung eingestellt. Dabei ist der Festaufnahmebereich und/oder der Maximalfestaufnahmebereich bspw. durch eine Parametrisierung der Bildverarbeitung und/oder einer Steuerungsvorrichtung zur Kameraeinstellung, bevorzugt durch den Bediener des Fahrzeugs, einstellbar. Insbesondere ist die Einstellung des Festaufnahmebereichs maximal im Bereich des Maximalfestaufnahmebereichs mit der Einstellung eines Außenspiegels durch den Bediener prinzipiell vergleichbar. Somit ist der Festaufnahmebereich durch die Einstellung insbesondere verschiebbar, wobei durch die Verschiebung die Grenzen des Maximalfestaufnahmebereichs nicht überschritten werden können. Zusätzlich kann es vorgesehen sein, dass neben der Verschiebung auch eine Vergrößerung des Festaufnahmebereichs innerhalb des Maximalfestaufnahmebereichs durch die Einstellung möglich ist. Der Gesamtaufnahmebereich umfasst dabei den Maximalfestaufnahmebereich und der Maximalfestaufnahmebereich umfasst den Festaufnahmebereich, so dass der Maximalfestaufnahmebereich nicht größer als der Gesamtaufnahmebereich und der Festaufnahmebereich nicht größer als der Maximalfestaufnahmebereich werden kann. Somit ist eine vielseitige Einstellbarkeit insbesondere der digitalen Außenspiegelfunktionalität gewährleistet.

Des Weiteren ist es denkbar, dass eine Auswertung zumindest einer Bildinformation der Kameravorrichtung erfolgt, wobei durch die Auswertung eine perspektivische Modifikation der Bildinformation derart erfolgt, dass eine teilweise oder vollständige (künstliche) Seiten- und/oder eine Draufsicht (zum Beispiel auf das Fahrzeug und/oder den Außenbereich) generiert wird. Die Auswertung kann dabei bspw. die Bildverarbeitung umfassen. Somit kann die Auswertung vorzugsweise auch die Generierung und/oder Extraktion des Festaufnahmebereichs aus der Bildinformation umfassen. Es ist dabei denkbar, dass der Festaufnahmebereich auf einem ersten Anzeigemittel der Anzeigevorrichtung und die Seiten- und/oder Draufsicht auf einem zweiten und/oder dritten Anzeigemittel der Anzeigevorrichtung dargestellt wird. Die Anzeigevorrichtung und/oder die Anzeigemittel sind dabei bspw. separate Monitore bzw. Bildschirme. Es ist dabei denkbar, dass die Anzeigemittel jeweils unabhängige Bildschirme sind oder alternativ nur bestimmte Bereiche einer einzigen Anzeigevorrichtung sind. Die Anzeigevorrichtung und/oder die Anzeigemittel können dabei bspw. für den Bediener des Fahrzeugs im vorderen Bereich des Fahrzeugs z. B. im Bereich einer Instrumententafel und/oder eines Armaturenbretts des Fahrzeugs angeordnet sein. Das erste Anzeigemittel ist dabei bspw. linksseitig vom Bediener oder linksseitig am Fahrzeug, das zweite Anzeigemittel rechtsseitig vom Bediener oder rechtsseitig am Fahrzeug, und das dritte Anzeigemittel mittig am Fahrzeug, insbesondere im Bereich einer Mittelkonsole des Fahrzeugs, angeordnet. Dies hat den Vorteil, dass die Sicherheit und der Komfort beim Betrieb des Fahrzeugs erhöht werden kann, insbesondere durch eine Darstellung des Außenbereichs aus verschiedenen Perspektiven.

Des Weiteren ist es im Rahmen der Erfindung denkbar, dass durch eine Auswertung der Bildinformation der Kameravorrichtung kritische Objekte um das Fahrzeug herum erkannt werden, z. B. weil sie sich direkt neben dem Fahrzeug befinden oder seitlich hinter dem Fahrzeug befinden, so dass diese kritischen Objekte durch einen Warnhinweis angezeigt werden. Bei diesem Warnhinweis kann es sich einerseits um einen Warnton oder um ein Leuchtsignal oder einen anderen Hinweis handeln, wie z. B. das Vibrieren des Lenkrads. Sofern eine optische Warnhinweisfunktion ausgewählt wird, kann diese auf der Anzeigevorrichtung z. B. als ein Warndreieck oder ein roter Punkt oder dergleichen deutlich angezeigt werden.

Es ist zudem denkbar, dass eine Anzeigeinformation ermittelt wird, welche Informationen über einen Festaufnahmebereich und/oder einen durch die Kameraeinstellung definierten Aufnahmebereich umfasst. Dabei ist insbesondere vorgesehen, dass ein Algorithmus und/oder eine Bildverarbeitung durch eine Auswertevorrichtung für die Auswertung der Bildinformation durchgeführt wird, um die Informationen aus der Bildinformation von, insbesondere einer einzigen, Kameravorrichtung zu generieren. Die Auswertevorrichtung umfasst hierzu mindestens eine elektronische Komponente, wie bspw. einen Mikroprozessor und/oder einen digitalen Signalprozessor und/oder eine nicht flüchtige Datenspeichereinheit und/oder einen integrierten Schaltkreis. Somit kann zuverlässig der Festaufnahmebereich extrahiert werden.

Optional ist es denkbar, dass der Festaufnahmebereich ein verkehrssicherheitsrelevanter Außenspiegelbereich des Fahrzeugs ist, wobei der Bereich des Aufnahmebereichs außerhalb des Festaufnahmebereichs beliebig innerhalb des Gesamtaufnahmebereichs und insbesondere der Festaufnahmebereich nur begrenzt innerhalb des Maximalfestaufnahmebereichs durch den Bediener verändert werden kann, wobei bevorzugt der Festaufnahmebereich mindestens 20 % oder mindestens 40 % oder mindestens 60 % der Ausdehnung des Aufnahmebereichs und/oder des Gesamtaufnahmebereichs aufweist. Hierdurch wird die Sicherheit während der Fahrt weiter optimiert.

Vorzugsweise kann vorgesehen sein, dass die Kameraeinstellung und/oder der Festaufnahmebereich, vorzugsweise eine Ausdehnung und/oder Position (des Aufnahmebereiches) der Kameraeinstellung und/oder des Festaufnahmebereichs, durch eine Steuerungsvorrichtung eingestellt wird, wobei insbesondere die Steuerungsvorrichtung zur Bedienung durch den Bediener ausgeführt ist, wobei bevorzugt die Kameraeinstellung und/oder eine maximale Ausrichtung der Kameravorrichtung durch die Einstellung des Festaufnahmebereichs begrenzt wird. Weiter ist es denkbar, dass die Kameraeinstellung und/oder die maximale Ausrichtung durch den Maximalfestaufnahmebereich und/oder Gesamtaufnahmebereich begrenzt werden. Die Steuerungsvorrichtung ist vorzugsweise elektrisch mit einem Antrieb zur Ausrichtung und/oder Bewegung der Kameravorrichtung verbunden. Dies ermöglicht eine zuverlässige Veränderung des Aufnahmebereichs und des Festaufnahmebereichs.

Es kann ferner möglich sein, dass die Kameravorrichtung derart im vorderen Bereich des Fahrzeugs angeordnet ist, dass ein toter Winkel, vorzugsweise vollständig oder größtenteils, am Fahrzeug erfassbar ist. Dabei ist der tote Winkel insbesondere der rückwärtige Sichtbereich des Fahrzeugs, welcher durch den Bediener des Fahrzeugs im korrekt eingestellten Außenspiegel trotz des Außenspiegels nicht sichtbar ist. Es kann dabei bspw. eine erste Kameravorrichtung linksseitig am Fahrzeug und eine zweite Kameravorrichtung rechtsseitig am Fahrzeug angeordnet sein. Hierdurch wird die Sicherheit währen der Fahrt weiter verbessert.

Es ist ferner denkbar, dass die Kameravorrichtung an einem Kotflügel des Fahrzeugs im vorderen Bereich des Fahrzeugs angeordnet ist, wobei vorzugsweise eine erste Kameravorrichtung an einem in Fahrzeugrichtung linksseitig vorderen Kotflügel und eine zweite Kameravorrichtung an einem im Fahrzeugrichtung rechtsseitigen vorderen Kotflügel angeordnet ist. Alternativ oder zusätzlich ist es denkbar, dass die Kameravorrichtung, insbesondere die erste und/oder zweite Kameravorrichtung, weiter vorne am Fahrzeug angeordnet sind, als üblicherweise ein Außenspiegel des Fahrzeugs angeordnet ist. Somit kann der Vorteil erzielt werden, dass ein weiterer rückwärtiger Bereich am Fahrzeug erfasst wird, als dies durch konventionelle Außenspiegel möglich ist.

Es kann zudem vorgesehen sein, dass eine erste Kameravorrichtung linksseitig und eine zweite Kameravorrichtung rechtsseitig am Fahrzeug angeordnet ist, und insbesondere derart ausgerichtet ist, dass jeder (durch die Kameraeinstellung) einstellbare Aufnahmebereich der ersten Kameravorrichtung innerhalb eines ersten Gesamtaufnahmebereichs des Außenbereichs liegt, und jeder (durch die Kameraeinstellung) einstellbare Aufnahmebereich der zweiten Kameravorrichtung innerhalb eines zweiten Gesamtaufnahmebereichs des Außenbereichs liegt. Insbesondere können verschiedene Kameravorrichtungen, bevorzugt mindestens zwei und/oder mindestens drei und/oder mindestens vier und/oder mindestens fünf Kameravorrichtungen, an einem Fahrzeug vorgesehen sein, wobei vorzugsweise auf jede Kameravorrichtung das erfindungsgemäße Verfahren durchführbar ist. Dies hat den Vorteil, dass der Fahrer einen umfassenden Überblick über den Außenbereich des Fahrzeugs erhält.

Optional kann es vorgesehen sein, dass die Kameravorrichtung durch mindestens einen Antrieb vertikal und/oder horizontal verschwenkbar ausgeführt ist, wodurch die Kameraeinstellung einstellbar ist. Alternativ oder zusätzlich ist es denkbar, dass die Kameravorrichtung durch mindestens einen Antrieb in einen eingefahrenen und ausgefahrenen Zustand bringbar ist, wobei die Kameravorrichtung im eingefahrenen Zustand vollständig im Fahrzeug, insbesondere in einer Aufnahme des Fahrzeugs, eingefahren ist. Somit ist eine umfassende Ausrichtung der Kameravorrichtung am Fahrzeug möglich.

Weiterhin ist es denkbar, dass die Anzeigevorrichtung und/oder zumindest ein Anzeigemittel der Anzeigevorrichtung, insbesondere als Monitor seitlich im Fahrzeuginnenraum angeordnet ist, wobei die Anzeigevorrichtung und/oder zumindest ein Anzeigemittel der Anzeigevorrichtung bevorzugt als OLED-Display ausgeführt ist. Die Anzeigevorrichtung und/oder das Anzeigemittel umfasst dabei bspw. mehrere organische Leuchtdioden (OLED) um durch eine kontrastreiche Darstellung die Sicherheit weiter zu verbessern.

Es kann weiter im Rahmen der Erfindung vorgesehen sein, dass die Kameravorrichtung als Außenkamera des Fahrzeugs ausgeführt ist, vorzugsweise mit einem, insbesondere ausschließlich einem einzigen, Bildsensor, bevorzugt einem CMOS- (Complementary metaloxide-semiconductor) oder CCD- (charge-coupled device) Sensor. Der Bildsensor kann dabei bspw. eine Auflösung und/oder Pixelanzahl von mindestens 1 Megapixel und/oder mindestens 2 Megapixel und/oder mindestens 3 Megapixel und/oder mindestens 4 Megapixel und/oder mindestens 8 Megapixel und/oder mindestens 16 Megapixel aufweisen. Weiter ist es denkbar, dass die Kameravorrichtung in Bezug auf die Pixelanzahl an die Anzeigevorrichtung angepasst ist oder umgekehrt. Damit wird eine zuverlässige Darstellung des Außenbereichs gewährleistet.

Außerdem kann es vorgesehen sein, dass die Anzeigevorrichtung zumindest ein Anzeigemittel, vorzugsweise einen Monitor bzw. Display, im Innenraum des Fahrzeugs umfasst, wobei ein erstes Anzeigemittel einen ersten Festaufnahmebereich einer ersten Kameravorrichtung linksseitig im Fahrzeuginnenraum darstellt und/oder ein zweites Anzeigemittel einen zweiten Festaufnahmebereich einer zweiten Kameravorrichtung rechtsseitig im Fahrzeuginnenraum darstellt und/oder ein drittes Anzeigemittel eine perspektivische Modifikation einer Bildinformation vorzugsweise im Bereich einer Mittelkonsole des Fahrzeugs darstellt. Es ist dabei denkbar, dass das erste Anzeigemittel und/oder das zweite Anzeigemittel ausschließlich den (ersten und/oder zweiten) Festaufnahmebereich darstellt oder alternativ zusätzlich noch weitere Bereiche des Außenbereichs außerhalb des Festaufnahmebereichs neben der Darstellung des Festaufnahmebereichs darstellt. Damit kann gewährleistet werden, dass der Bediener des Fahrzeugs auch schwierig einzusehende Bereiche des rückwärtigen Außenbereichs einsehen kann. Der Festaufnahmebereich ist damit insbesondere ausschließlich ein rückwärtiger Außenbereich des Fahrzeugs aus der Perspektive des Fahrers des Fahrzeugs.

Ebenfalls unter Schutz gestellt ist eine Kameravorrichtung zur Erfassung und/oder Darstellung eines rückwärtigen Außenbereichs eines Fahrzeugs, welche insbesondere gemäß einem erfindungsgemäßen Verfahren betreibbar ist. Damit bringt die erfindungsgemäße Kameravorrichtung die gleichen Vorteile mit sich, wie sie ausführlich mit Bezug auf ein erfindungsgemäßes Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht auf ein Fahrzeug mit einem System,
- Figur 2: eine schematische Draufsicht auf ein Fahrzeug mit einem System,
- Figur 3 + 4: schematische Seitenansichten auf ein Fahrzeug mit einem System und
- Figur 5 + 6: schematische Darstellungen von Teilen eines Systems zur Visualisierung eines erfindungsgemäßen Verfahrens.

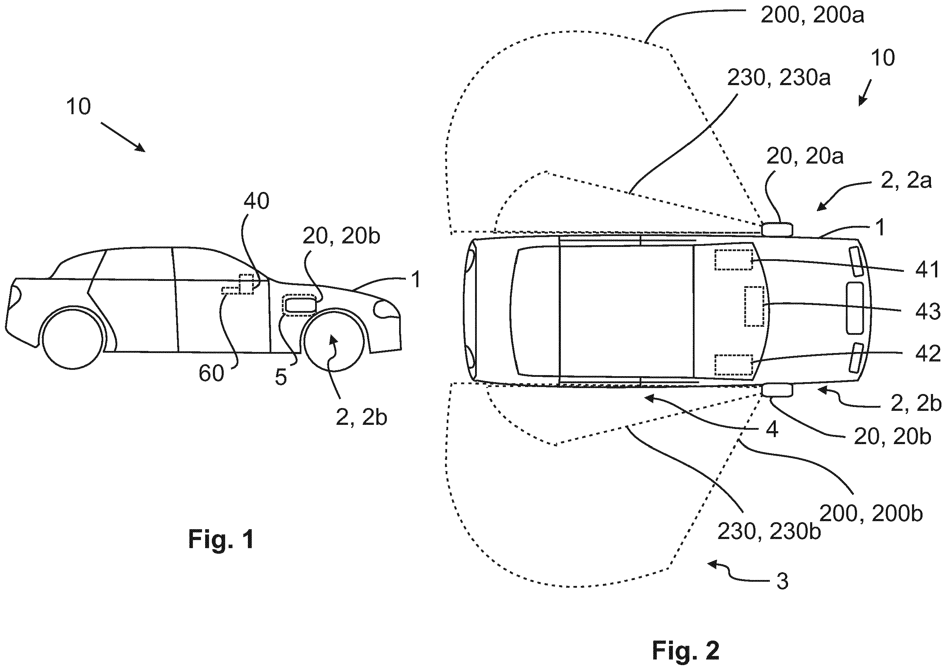

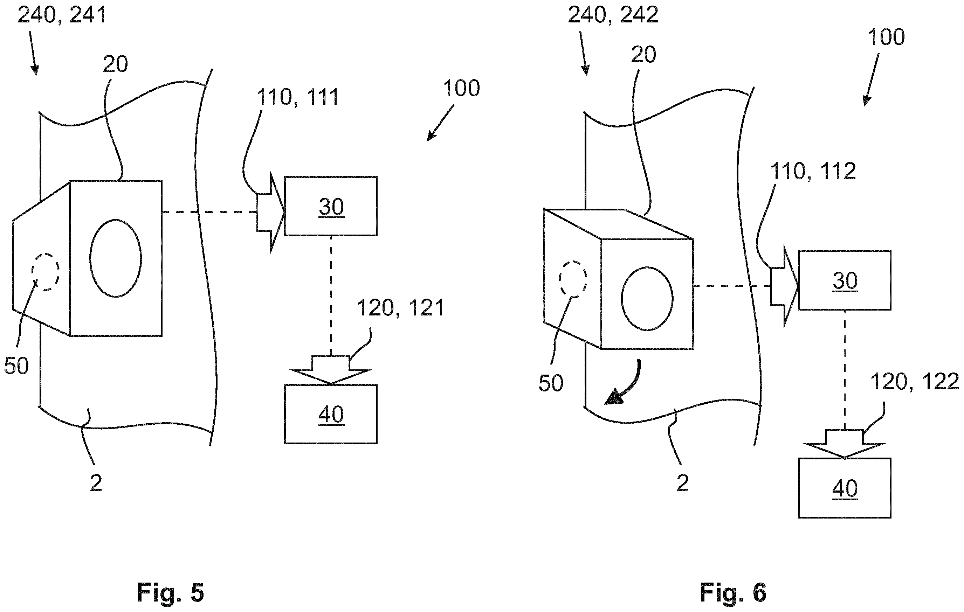

In Figur 1 ist schematisch ein System 10 gezeigt, welches an einem Fahrzeug 1 angeordnet ist. Das System 10 umfasst dabei mindestens eine Kameravorrichtung 20. Neben einer in Figur 1 gezeigten zweiten Kameravorrichtung 20b, welche rechtsseitig am Fahrzeug 1 angeordnet ist, kann auch eine in Figur 2 dargestellte erste Kameravorrichtung 20a linksseitig am Fahrzeug 1 angeordnet sein. Vorzugsweise ist dabei eine erste Kameravorrichtung 20a an einem linksseitigen Kotflügel 2a und eine zweite Kameravorrichtung 20b an einem rechtsseitigen Kotflügel 2b angeordnet. Selbstverständlich ist neben der Anordnung der Kameravorrichtung 20 am Kotflügel 2 auch eine Anordnung der Kameravorrichtung 20 an anderen Bereichen im vorderen Bereich des Fahrzeugs 1 möglich. Zur Anordnung weist das Fahrzeug 1 insbesondere eine Aufnahme 5 auf. Im Fahrzeuginnenraum des Fahrzeugs 1 ist insbesondere eine Anzeigevorrichtung 40 vorgesehen. Weiter umfasst das Fahrzeug 1 eine Steuerungsvorrichtung 60, welche insbesondere vollständig oder teilweise ebenfalls im Fahrzeuginnenraum angeordnet ist. So kann die Steuerungsvorrichtung 60 Bedienelemente für einen Bediener des Fahrzeugs 1 umfassen, um durch einen in Figur 5 und 6 schematisch dargestellten Antrieb 50 die Kameravorrichtung 20 auszurichten.

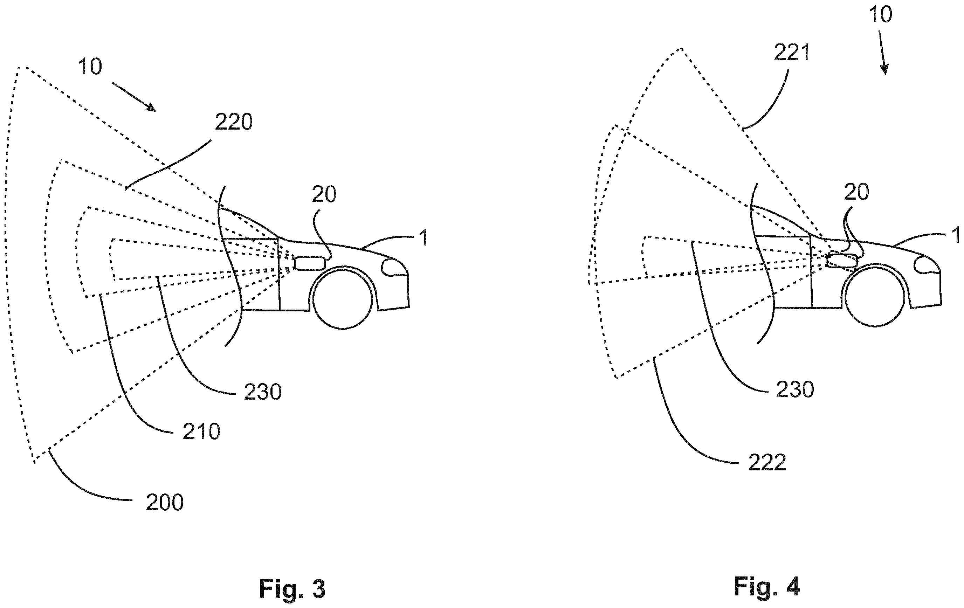

Die Ausrichtung der Kameravorrichtung 20 erfolgt insbesondere derart, dass ein Aufnahmebereich 220 durch die Kameravorrichtung 20 erfassbar ist. In Abhängigkeit von der Kameraeinstellung 240 können dabei unterschiedliche Aufnahmebereiche 220 durch die Kameravorrichtung 20 erfasst werden, wobei die sämtlichen möglichen Aufnahmebereiche 220 innerhalb eines Gesamtaufnahmebereichs 200 liegen müssen. Der Gesamtaufnahmebereich 200 ist somit der in den unterschiedlichen Kameraeinstellungen 240 maximal durch die Kameravorrichtung 20 erfassbare Bereich, wie in Figur 2 näher dargestellt ist. Es ist somit ein erster Gesamtaufnahmebereich 200a für eine erste Kameravorrichtung 20a vorgesehen, und ein zweiter Gesamtaufnahmebereich 200b für eine zweite Kameravorrichtung 20b. Der erste Gesamtaufnahmebereich 200a umfasst dabei bspw. einen linksseitigen rückwärtigen Außenbereich 3, insbesondere einen linksseitigen toten Winkel 4, des Fahrzeugs 1. Der zweite Gesamtaufnahmebereich 200b umfasst dabei bspw. einen rechtsseitigen Außenbereich 3, insbesondere einen rechtsseitigen toten Winkel 4, des Fahrzeugs 1. Der Festaufnahmebereich 230 liegt weiter innerhalb des Gesamtaufnahmebereichs 200, wobei eine erste Kameravorrichtung 20a einen ersten Festaufnahmebereich 230a und eine zweite Kameravorrichtung 20b einen zweiten Festaufnahmebereich 230b erfasst. Zur Darstellung des ersten Festaufnahmebereichs 230a kann bspw. ein erstes Anzeigemittel 41 der Anzeigevorrichtung 40 linksseitig im Innenraum des Fahrzeugs 1 angeordnet sein. Zur Darstellung des zweiten Festaufnahmebereichs 230b kann bspw. ein zweites Anzeigemittel 42 der Anzeigevorrichtung 40 rechtsseitig im Innenraum des Fahrzeugs 1 angeordnet sein. Eine zusätzliche Darstellung des Außenbereichs 3 kann bspw. durch ein zusätzliches drittes Anzeigemittel 43, bspw. im Bereich einer Mittelkonsole im Innenraum des Fahrzeugs 1, durchgeführt werden. Der Festaufnahmebereich 230 ist dabei ein Teilbereich eines Maximalfestaufnahmebereichs 210 und der Maximalfestaufnahmebereich 210 ist ein Teilbereich eines erfassten Aufnahmebereichs 220 und der Aufnahmebereich 220 ist dabei ein Teilbereich eines Gesamtaufnahmebereichs 200. Dies ist schematisch in Figur 3 gezeigt, wobei hier der Maximalfestaufnahmebereich 210 immer ein Teilbereich sämtlicher Aufnahmebereiche 220 für unterschiedliche Kameraeinstellungen 240 ist. Alternativ kann es allerdings auch vorgesehen sein, dass der Maximalfestaufnahmebereich 210 keine Einschränkung der Aufnahmebereiche 220 bewirkt, wobei dann in Abhängigkeit von dem eingestellten Festaufnahmebereich 230 der Gesamtaufnahmebereich 200 variiert wird.

In Abhängigkeit von den Kameraeinstellungen 240 kann der erfasste Aufnahmebereich 220 verändert werden. So ist in den Figuren 4 bis 6 dargestellt, dass in einer ersten Kameraeinstellung 241 ein erster Aufnahmebereich 221 und in einer zweiten Kameraeinstellung 242 ein zweiter Aufnahmebereich 222 erfasst wird. Der Festaufnahmebereich 230 ist dabei unabhängig von der Kameraeinstellung 240 stets ein Teilbereich des Aufnahmebereichs 220, wie in Figur 4 deutlich zu sehen ist.

Weiter ist in den Figuren 5 und 6 schematisch ein erfindungsgemäßes Verfahren 100 visualisiert. In jeder Kameraeinstellung 240 erfasst und/oder ermittelt dabei die Kameravorrichtung 20 im Normalbetrieb eine Bildinformation 110. Insbesondere wird eine erste Bildinformation 111 in einer ersten Kameraeinstellung 241 und eine zweite Bildinformation 112 in einer zweiten Kameraeinstellung 242 erfasst und/oder ermittelt. Die Bildinformation 110 wird anschließend durch eine Auswertevorrichtung 30 z. B. durch eine Bildverarbeitung ausgewertet, wobei anschließend eine Anzeigeinformation 120, insbesondere eine erste Anzeigeinformation 121 für eine erste Kameraeinstellung 241 und eine zweite Anzeigeinformation 122 für eine zweite Kameraeinstellung 242, an die Anzeigevorrichtung 40 übertragen.

Die voranstehende Erläuterung der Ausführungsform beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Kotflügel

- 2a: linksseitiger Kotflügel
- 2b: rechtsseitiger Kotflügel
- 3: Außenbereich
- 4: Toter Winkel
- 5: Aufnahme

- 10: System

- 20: Kameravorrichtung

- 20a: erste Kameravorrichtung
- 20b: zweite Kameravorrichtung

- 30: Auswertevorrichtung

- 40: Anzeigevorrichtung
- 41: erstes Anzeigemittel
- 42: zweites Anzeigemittel
- 43: drittes Anzeigemittel

- 50: Antrieb

- 60: Steuerungsvorrichtung
- 100: Verfahren
- 110: Bildinformation
- 111: erste Bildinformation
- 112: zweite Bildinformation

- 120: Anzeigeinformation
- 121: erste Anzeigeinformation
- 122: zweite Anzeigeinformation

- 200: Gesamtaufnahmebereich

- 200a: erster Gesamtaufnahmebereich
- 200b: zweiter Gesamtaufnahmebereich

- 210: Maximalfestaufnahmebereich

- 220: Aufnahmebereich
- 221: erster Aufnahmebereich
- 222: zweiter Aufnahmebereich
- 230: Festaufnahmebereich

- 230a: erster Festaufnahmebereich
- 230b: zweiter Festaufnahmebereich

- 240: Kameraeinstellung
- 241: erste Kameraeinstellung
- 242: zweite Kameraeinstellung

## Patentansprüche

1. Verfahren (100) zur Darstellung eines rückwärtigen Außenbereiches (3) eines Fahrzeuges (1), mit wenigstens einer Kameravorrichtung (20) am Fahrzeug (1), wobei die Kameravorrichtung (20) in verschiedene Kameraeinstellungen (240) gebracht wird, und
in Abhängigkeit von den Kameraeinstellungen (240) jeweils unterschiedliche kameraeinstellungsabhängige Aufnahmebereiche (220) des Außenbereiches (3) durch die Kameravorrichtung (20) erfasst werden, wobei
unabhängig von der Kameraeinstellung (240) ein Festaufnahmebereich (230) des Außenbereiches (3) durch die Kameravorrichtung (20) erfasst wird, um den Festaufnahmebereich (230) für einen Bediener des Fahrzeuges (1) darzustellen, **dadurch gekennzeichnet,**
**dass** die Kameravorrichtung (20) zum Ausrichten relativ zum Fahrzeug (1) bewegt, insbesondere verschwenkt, wird, um den Aufnahmebereich (220) zu verändern, wobei unabhängig von der Bewegung der Kameravorrichtung (20) der Festaufnahmebereich (230) erfasst und/oder dargestellt wird, und bevorzugt die Darstellung des Festaufnahmebereiches (230) bewegungskompensiert erfolgt.

2. Verfahren (100) nach Anspruch 1,
**dadurch gekennzeichnet,**
**dass** die nachfolgenden Schritte vorgesehen sind:
- Ausrichten der Kameravorrichtung (20) am Fahrzeug (1), wobei in einer ersten Kameraeinstellung (241) ein erster Aufnahmebereich (221) und in weiteren Kameraeinstellungen (240) jeweils weitere Aufnahmebereiche (220) durch die Kameravorrichtung (20) erfasst werden können,
- Ermitteln von wenigstens einer Bildinformation (110) über den ersten Aufnahmebereich (221) durch die Kameravorrichtung (20),
- Ermitteln von wenigstens einer Anzeigeinformation (120) über zumindest einen teilweisen ersten Aufnahmebereich (221) aus der Bildinformation (110),
- Anzeigen der Anzeigeinformation (120) durch mindestens eine im Fahrzeuginnenraum angeordnete Anzeigevorrichtung (40) zur Darstellung mindestens eines Festaufnahmebereiches (230) des Außenbereiches (3) und/oder des Aufnahmebereiches (221) für den Bediener des Fahrzeuges (1),
wobei der Festaufnahmebereich (230), insbesondere als digitaler Außenspiegel, unabhängig von der Kameraeinstellung (240) dargestellt wird und/oder die Kameravorrichtung (20) in Abhängigkeit von den Kameraeinstellungen (240) zur Erfassung der jeweiligen kameraeinstellungsabhängigen Aufnahmebereiche (220) am Fahrzeug (1) ausgerichtet wird, wobei die Ausrichtung der Kameravorrichtung (20) derart begrenzt wird, dass der Festaufnahmebereich (230) durch den jeweiligen kameraeinstellungsabhängigen Aufnahmebereich (220) umfasst wird.

3. Verfahren (100) nach einem der vorhergehenden Ansprüche,
**dadurch gekennzeichnet,**
**dass** die nachfolgenden Schritte vorgesehen sind:
- Erfassen eines ersten Aufnahmebereiches (221) durch die Kameravorrichtung (20) in einer ersten Kameraeinstellung (241),
- Ermitteln einer ersten Bildinformation (111) über den ersten Aufnahmebereich (221),
- Ermitteln einer ersten Anzeigeinformation (121) über zumindest einen teilweisen ersten Aufnahmebereich (221) und den Festaufnahmebereich (230) aus der ersten Bildinformation (111),
- Anzeigen der ersten Anzeigeinformation (121) durch die Anzeigevorrichtung (40), wobei der erste Aufnahmebereich (221) mit dem Festaufnahmebereich (230) dargestellt wird,
- Erfassen eines zweiten Aufnahmebereiches (222) durch die Kameravorrichtung (20) in einer zweiten Kameraeinstellung (242), wobei zum Wechsel von der ersten in die zweite Kameraeinstellung (242) vorzugsweise eine Bewegung der Kameravorrichtung (20) durchgeführt wird,
- Ermitteln einer zweiten Bildinformation (112) über den zweiten Aufnahmebereich (222),
- Ermitteln einer zweiten Anzeigeinformation (122) über zumindest einen teilweisen zweiten Aufnahmebereich (222) und den Festaufnahmebereich (230) aus der zweiten Bildinformation (112),
- Anzeigen der zweiten Anzeigeinformation (122) durch die Anzeigevorrichtung (40), wobei der zweite Aufnahmebereich (222) mit dem Festaufnahmebereich (230) dargestellt wird.

4. Verfahren (100) nach einem der vorhergehenden Ansprüche,
**dadurch gekennzeichnet,**
**dass** die Aufnahmebereiche (220) jeweils Teilbereiche eines Gesamtaufnahmebereichs (200) des Außenbereiches (3) sind, wobei die Kameravorrichtung (20) in den verschiedenen Kameraeinstellungen (240) maximal den Gesamtaufnahmebereich (200) erfassen kann.

5. Verfahren (100) nach einem der vorhergehenden Ansprüche,
**dadurch gekennzeichnet,**
**dass** der Festaufnahmebereich (230) aus einer Seitenspiegelperspektive für den Bediener dargestellt wird.

6. Verfahren (100) nach einem der vorhergehenden Ansprüche,
**dadurch gekennzeichnet,**
**dass** der Festaufnahmebereich (230) und/oder die Kameraeinstellung (240), insbesondere unabhängig voneinander, durch den Bediener des Fahrzeuges (1) einstellbar sind, wobei der Festaufnahmebereich (230) nur innerhalb eines Maximalfestaufnahmebereiches (210) eines Gesamtaufnahmebereiches (200) einstellbar ist.

7. Verfahren (100) nach einem der vorhergehenden Ansprüche,
**dadurch gekennzeichnet,**
**dass** eine Auswertung zumindest einer Bildinformation (110) der Kameravorrichtung (20) erfolgt, wobei durch die Auswertung eine perspektivische Modifikation der Bildinformation (110) derart erfolgt, dass eine teilweise oder vollständige Seiten- und/oder Draufsicht generiert wird.

8. Verfahren (100) nach einem der vorhergehenden Ansprüche,
**dadurch gekennzeichnet,**
**dass** eine Anzeigeinformation (120) ermittelt wird, welche Informationen über
- einen festen Festaufnahmebereich (230),
- und einen durch die Kameraeinstellung (240) definierten Aufnahmebereich (220) umfasst,
wobei vorzugsweise ein Algorithmus durch eine Auswertevorrichtung (30) für eine Auswertung einer Bildinformation (110) der, insbesondere einer einzigen, Kameravorrichtung (20) durchgeführt wird, um die Informationen aus der Bildinformation (110) zu generieren.

9. Verfahren (100) nach einem der vorhergehenden Ansprüche,
**dadurch gekennzeichnet,**
**dass** der Festaufnahmebereich (230) zumindest teilweise einen verkehrssicherheitsrelevanter Außenspiegelbereich des Fahrzeuges (1) umfasst, wobei insbesondere der Bereich des Aufnahmebereiches (220) außerhalb des Festaufnahmebereiches (230) beliebig innerhalb eines Gesamtaufnahmebereiches (200) und insbesondere der Festaufnahmebereich (230) nur begrenzt durch den Bediener innerhalb eines Maximalfestaufnahmebereiches (210) verändert werden kann, wobei bevorzugt der Festaufnahmebereich (230) mindestens 20 % oder mindestens 40 % oder mindestens 60 % der Ausdehnung des Aufnahmebereiches (220) und/oder des Gesamtaufnahmebereiches (200) aufweist, wobei das Fahrzeug (1) vorzugsweise außenspiegelfrei ausgeführt ist.

10. Verfahren (100) nach einem der vorhergehenden Ansprüche,
**dadurch gekennzeichnet,**
**dass** die Kameraeinstellung (240) und/oder der Festaufnahmebereich (230), vorzugsweise eine Ausdehnung und/oder Position des Aufnahmebereiches (220) der Kameraeinstellung (240) und/oder des Festaufnahmebereiches (230), durch eine Steuerungsvorrichtung (60) eingestellt wird, wobei die Steuerungsvorrichtung (60) zur Bedienung durch den Bediener ausgeführt ist, wobei vorzugsweise die Kameraeinstellung (240) und/oder eine maximale Ausrichtung der Kameravorrichtung (20) durch die Einstellung des Festaufnahmebereiches (230) begrenzt wird.

11. Kameravorrichtung (20) zur Erfassung eines rückwärtigen Außenbereiches (3) eines Fahrzeuges (1) nach einem der vorhergehenden Ansprüche.

## Claims

1. Method (100) for displaying a rear external region (3) of a vehicle (1), comprising at least one camera device (20) on the vehicle (1), wherein the camera device (20) is brought into different camera settings (240), and different detection areas (220) of the external region (3), which depend on the camera settings, are captured in each case by the camera device (20) as a function of the camera settings (240), wherein
a fixed detection area (230) of the external region (3) is captured by the camera device (20) irrespectively of the camera setting (240), in order to display the fixed detection area (230) for an operator of the vehicle (1)
**characterized in that**
the camera device (20) is moved, particularly swivelled, to orientate it relative to the vehicle (1), in order to alter the detection area (220), wherein the fixed detection area (230) is captured and/or displayed independently of the movement of the camera device (20), and the fixed detection area (230) is displayed with compensation for the movement.

2. Method (100) according to claim 1,
**characterized in that**
the following steps are provided:
- orientation of the camera device (20) on the vehicle (1), wherein a first detection area (221) can be detected in a first camera setting (241) by the camera device (20), and further detection areas (220) can each be captured in further camera settings (240),
- determination of at least one item of image information (110) via the first detection area (221) by the camera device (20),
- determination of at least one item of display information (120) via at least one partial first detection area (221) from the item of image information (110),
- display of the display information (120) by at least one display device (40) arranged in the vehicle interior for displaying at least one fixed detection area (230) of the external region (3) and/or of the detection area (221) for the operator of the vehicle (1),
wherein the fixed detection area (230), is displayed particularly as a digital exterior mirror, regardless of the camera setting (240), and/or the camera device (20) is orientated on the vehicle (1) as a function of the camera settings (240) for capturing the respective detection areas (220) which depend on the camera settings, wherein the orientation of the camera device (20) is limited in such manner that the fixed detection area (230) is included in the respective detection area (220) that depends on the camera settings.

3. Method (100) according to any one of the preceding claims,
**characterized in that**
the following steps are provided:
- capturing a first receiving area (221) by the camera device (20) in a first camera setting (241),
- determining a first item of image information (111) via the first recording area (221),
- determining a first item of display information (121) via at least one partial first detection area (221) and the fixed detection area (230) from the first item of image information (111),
- displaying the first item of display information (121) by the display device (40), wherein the first detection area (221) is displayed with the fixed detection area (230),
- capturing a second detection area (222) by the camera device (20) in a second camera setting (242), wherein a movement of the camera device (20) is preferably carried out in order to change from the first to the second camera setting (242),
- determining a second item of image information (112) via the second recording area (222),
- determining a second item of display information (122) via at least one partial second detection area (222) and the fixed detection area (230) from the second item of image information (112),
- displaying the second item of display information (122) by the display device (40), wherein the second detection area (222) is displayed with the fixed detection area (230).

4. Method (100) according to any one of the preceding claims,
**characterized in that**
the detection areas (220) are each subregions of an overall detection area (200) of the external region (3), wherein the camera device (20) can capture at most the overall detection area (200) in the various camera settings (240).

5. Method (100) according to any one of the preceding claims,
**characterized in that**
the fixed detection area (230) is displayed for the operator from a side mirror perspective.

6. Method (100) according to any one of the preceding claims,
**characterized in that**
**in that** the fixed detection area (230) and/or the camera setting (240) are adjustable by the operator of the vehicle (1), in particular independently of one another, wherein the fixed detection area (230) is only adjustable within a maximum fixed detection area (210) of an overall detection area (200).

7. Method (100) according to any one of the preceding claims,
**characterized in that**
at least one item of image information (110) from the camera device (20) is evaluated, wherein the evaluation results in a perspective modification of the image information (110) in such manner that a partial or complete lateral and/or top view is/are generated.

8. Method (100) according to any one of the preceding claims,
**characterized in that**
an item of display information (120) is determined which comprises information about
- a permanent fixed detection area (230),
- and a detection (220) which is defined by the camera setting (240),
wherein an algorithm is executed preferably by an evaluator (30) for evaluating an item of image information (110) from the, in particular a single camera device (20), in order to generate the information from the item of image information (110).

9. Method (100) according to any one of the preceding claims,
**characterized in that**
the fixed detection area (230) at least partially includes an exterior mirror region of the vehicle (1) which is critical for traffic safety, where in particular the region of the detection area (220) outside of the fixed detection area (230) can be changed at will within an overall detection area (200), and in particular the fixed detection area (230) can only be changed by the operator to a limited degree within a maximum fixed detection area (210), wherein the fixed detection area (230) preferably includes at least 20% or at least 40% or at least 60% of the extent of the detection area (220) and/or of the overall detection area (200), wherein the vehicle (1) is preferably designed without exterior mirrors.

10. Method (100) according to any one of the preceding claims,
**characterized in that**
the camera setting (240) and/or the fixed detection area (230), preferably an extent and/or position of the detection area (220) of the camera setting (240) and/or of the fixed detection area (230) is adjusted by a control device (60), wherein the control device (60) is designed to be operated by the operator, wherein the camera setting (240) and/or a maximum orientation of the camera device (20) is preferably limited by the setting of the fixed detection area (230) .

11. Camera device (20) for capturing a rear external region (3) of a vehicle (1) according to any one of the preceding claims.

## Revendications

1. Procédé (100) de représentation d'une zone extérieure arrière (3) d'un véhicule (1) avec au moins un dispositif de caméra (20) sur le véhicule (1), sachant que le dispositif de caméra (20) est placé dans différents réglages de caméra (240)
et
que différentes zones de prise de vue (220) dépendantes du réglage de caméra de la zone extérieure (3) sont respectivement saisies par le dispositif de caméra (20) en fonction des réglages de caméra (240), sachant qu'indépendamment du réglage de caméra (240), une zone de prise de vue fixe (230) de la zone extérieure (3) est saisie par le dispositif de caméra (20) pour représenter la zone de prise de vue fixe (230) pour un utilisateur du véhicule (1), **caractérisé en ce que**
le dispositif de caméra (20) est déplacé, en particulier pivoté, pour orientation par rapport au véhicule (1) pour modifier la zone de prise de vue (220), sachant qu'indépendamment du déplacement du dispositif de caméra (20), la zone de prise de vue fixe (230) est saisie et/ou représentée et la représentation de la zone de prise de vue fixe (230) a lieu de préférence avec compensation de mouvement.

2. Procédé (100) selon la revendication 1, **caractérisé en ce que**
les étapes suivantes sont prévues :
- orientation du dispositif de caméra (20) sur le véhicule (1), sachant que dans un premier réglage de caméra (241), une première zone de prise de vue (221) et dans d'autres réglages de caméra (240), d'autres zones de prise de vue (220) peuvent être respectivement saisies par le dispositif de caméra (20),
- détermination d'au moins une information en image (110) sur la première zone de prise de vue (221) par le dispositif de caméra (20),
- détermination d'au moins une information d'affichage (120) sur au moins une première zone de prise de vue partielle (221) à partir de l'information en image (110),
- affichage de l'information d'affichage (120) par au moins un dispositif d'affichage (40) disposé dans l'habitacle du véhicule pour représenter au moins une zone de prise de vue fixe (230) de la zone extérieure (3) et/ou de la zone de prise de vue (221) pour l'utilisateur du véhicule (1),
sachant que la zone de prise de vue fixe (230) est représentée en particulier sous la forme d'un rétroviseur extérieur numérique, indépendamment du réglage de caméra (240) et/ou le dispositif de caméra (20) est orienté en fonction des réglages de caméra (240) pour la saisie des zones de prise de vue (220) respectives dépendantes du réglage de caméra sur le véhicule (1), sachant que l'orientation du dispositif de caméra (20) est limitée de telle manière que la zone de prise de vue fixe (230) est englobée par la zone de prise de vue (220) respective dépendante du réglage de caméra.

3. Procédé (100) selon l'une quelconque des revendications précédentes,
**caractérisé en ce que**
les étapes suivantes sont prévues :
- saisie d'une première zone de prise de vue (221) par le dispositif de caméra (20) dans un premier réglage de caméra (241),
- détermination d'une première information en image (111) sur la première zone de prise de vue (221),
- détermination d'une première information d'affichage (121) sur au moins une première zone de prise de vue partielle (221) et la zone de prise de vue fixe (230) à partir de la première information en image (111),
- affichage de la première information d'affichage (121) par le dispositif d'affichage (40), sachant que la première zone de prise de vue (221) est représentée avec la zone de prise de vue fixe (230),
- saisie d'une deuxième zone de prise de vue (222) par le dispositif de caméra (20) dans un deuxième réglage de caméra (242), sachant que pour changer du premier au deuxième réglage de caméra (242), un déplacement du dispositif de caméra (20) est de préférence exécuté,
- détermination d'une deuxième information en image (112) sur la deuxième zone de prise de vue (222),
- détermination d'une deuxième information d'affichage (122) sur au moins une deuxième zone de prise de vue partielle (222) et la zone de prise de vue fixe (230) à partir de la deuxième information en image (112),
- affichage de la deuxième information d'affichage (122) par le dispositif d'affichage (40), sachant que la deuxième zone de prise de vue (222) est représentée avec la zone de prise de vue fixe (230) .

4. Procédé (100) selon l'une quelconque des revendications précédentes,
**caractérisé en ce que**
les zones de prise de vue (220) sont respectivement des zones partielles d'une zone de prise de vue totale (200) de la zone extérieure (3), sachant que le dispositif de caméra (20) peut saisir dans les différents réglages de caméra (240) au maximum la zone de prise de vue totale (200).

5. Procédé (100) selon l'une quelconque des revendications précédentes,
**caractérisé en ce que**
la zone de prise de vue fixe (230) est représentée pour l'utilisateur à partir d'une perspective de rétroviseur latéral.

6. Procédé (100) selon l'une quelconque des revendications précédentes,
**caractérisé en ce que**
la zone de prise de vue fixe (230) et/ou le réglage de caméra (240), peuvent être réglés en particulier indépendamment l'un de l'autre, par l'utilisateur du véhicule (1), sachant que la zone de prise de vue fixe (230) ne peut être réglée qu'à l'intérieur d'une zone de prise de vue maximale (210) d'une zone de prise de vue totale (200).

7. Procédé (100) selon l'une quelconque des revendications précédentes,
**caractérisé en ce qu'**
une évaluation d'au moins une information en image (110) du dispositif de caméra (20) a lieu, sachant qu'une modification en perspective de l'information en image (110) a lieu par l'évaluation de telle manière qu'une vue de côté et/ou de dessus partielle ou complète est générée.

8. Procédé (100) selon l'une quelconque des revendications précédentes,
**caractérisé en ce qu'**
une information d'affichage (120) est déterminée, laquelle comprend des informations sur
- une zone de prise de vue fixe stationnaire (230),
- et une zone de prise de vue (220) définie par le réglage de caméra (240),
sachant de préférence qu'un algorithme est exécuté par un dispositif d'évaluation (30) pour une évaluation d'une information en image (110) du, en particulier d'un dispositif de caméra (20) unique pour générer les informations à partir de l'information en image (110).

9. Procédé (100) selon l'une quelconque des revendications précédentes,
**caractérisé en ce que**
la zone de prise de vue fixe (230) comprend au moins en partie une zone de rétroviseur extérieur concernant la sécurité de la circulation routière du véhicule (1), sachant en particulier que la zone de la zone de prise de vue (220) ne peut être modifiée en dehors de la zone de prise de vue fixe (230) à volonté à l'intérieur d'une zone de prise de vue totale (200) et en particulier la zone de prise de vue fixe (230) que de façon limitée par l'utilisateur à l'intérieur d'une zone de prise de vue fixe maximale (210), sachant de préférence que la zone de prise de vue fixe (230) comporte au moins 20 % ou au moins 40 % ou au moins 60 % de l'extension de la zone de prise de vue (220) et/ou de la zone de prise de vue totale (200), sachant que le véhicule (1) est réalisé de préférence sans rétroviseur extérieur.

10. Procédé (100) selon l'une quelconque des revendications précédentes,
**caractérisé en ce que**
le réglage de caméra (240) et/ou la zone de prise de vue fixe (230), de préférence une extension et/ou une position de la zone de prise de vue (220) du réglage de caméra (240) et/ou de la zone de prise de vue fixe (230), sont réglés par un dispositif de commande (60), sachant que le dispositif de commande (60) est exécuté pour être utilisé par l' utilisateur, sachant de préférence que le réglage de caméra (240) et/ou une orientation maximale du dispositif de caméra (20) est limité par le réglage de la zone de prise de vue fixe (230) .

11. Dispositif de caméra (20) pour la saisie d'une zone extérieure arrière (3) d'un véhicule (1) selon l'une quelconque des revendications précédentes.
